(19) Europäisches Patentamt
European Patent Office
Office européen des brevets

(11) Veröffentlichungsnummer: 0 261 614
A2

(12) EUROPÄISCHE PATENTANMELDUNG

(21) Anmeldenummer: 87113725.3

(51) Int. Cl.4: C09K 19/02 , C09K 19/42

(22) Anmeldetag: 19.09.87

(30) Priorität: 26.09.86 CH 3881/86

(43) Veröffentlichungstag der Anmeldung: 30.03.88 Patentblatt 88/13

(84) Benannte Vertragsstaaten: CH DE FR GB IT LI NL

(71) Anmelder: F. HOFFMANN-LA ROCHE & CO. Aktiengesellschaft

CH-4002 Basel(CH)

(72) Erfinder: Leenhouts, Frans, Dr.
Violaweg 73
CH-4303 Kaiseraugst(CH)
Erfinder: Schadt, Martin, Dr.
Liestalerstrasse 77
CH-4411 Seltisberg(CH)

(74) Vertreter: Zimmermann, Hans, Dr. et al
Grenzacherstrasse 124 Postfach 3255
CH-4002 Basel(CH)

(54) **Flüssigkristallanzeigezelle.**

(57) Flüssigkristallzelle mit hochverdrillter nematischer Flüssigkristallschicht sowie ein flüssigkristallines Gemisch mit positiver dielektrischer Anisotropie und einem Verhältnis der elastischen Konstanten $k_{33}/k_{11}$ von mindestens 1,2 bestehend aus

a) 20-70 Gew.-% einer flüssigkristallinen Komponente A bestehend aus einer oder mehreren Verbindungen mit einer dielektrischen Anisotropie von über +1,5, welche mehrheitlich einen Wert $k_{33}/k_{11}$ von mindestens 1,3 aufweisen.

b) 20-70 Gew.-% einer flüssigkristallinen Komponente B bestehend aus einer oder mehreren Verbindungen mit einer dielektrischen Anisotropie von -1,5 bis +1,5, welche grösstenteils einen Wert $k_{33}/k_{11}$ von mindestens 0,9 aufweisen,

c) 1-20 Gew.-% einer Komponente C, bestehend aus einer oder mehreren Verbindungen mit einer dielektrischen Anisotropie von unter -1,5,

d) 5-40 Gew.-% einer Komponente D, bestehend aus einer oder mehreren Verbindungen mit einem Klärpunkt von über 80°C, und

e) einer optisch aktiven Komponente E in einer Menge, dass das Verhältnis zwischen Schichtdicke und natürlicher Ganghöhe des Gesamtgemisches etwa 0,3 bis 1,3 beträgt.

EP 0 261 614 A2

## Flüssigkristallanzeigezelle

Die Erfindung betrifft eine Flüssigkristallanzeigezelle mit einer hochverdrillten nematischen Flüssigkristallschicht sowie ein verbessertes Flüssigkristallmaterial für diese Anzeigezelle. Unter hochverdrillten Flüssigkristallschichten versteht man dabei solche, die um mehr als 90° verdrillt sind.

Die meisten bisher verwendeten Flüssigkristallanzeigevorrichtungen enthalten eine verdrillt nematische Flüssigkristallschicht mit einer Verdrillung von 90°. Anzeigevorrichtungen mit hoher Informationsdichte werden im allgemeinen nach einem sogenannten Multiplexverfahren betrieben, um die Zahl der elektrischen Anschlüsse möglichst gering zu halten. Bei einer Verdrillung von 90° lassen sich Multiplexverhältnisse bis etwa 200:1 erreichen, wobei jedoch eine relativ starke Sichtwinkelabhängigkeit und ein geringer Kontrast resultieren.

Seit einiger Zeit ist bekannt, dass Flüssigkristallanzeigezellen mit einer hochverdrillten nematischen Flüssigkristallschicht, wie Supertwist-(STN-), Superbirefringence-(SBE-) oder Optical Mode Interference-(OMI-) Displays, gegenüber denjenigen mit 90°-Verdrillung gewisse Vorteile aufweisen, nämlich einen grösseren Sichtwinkelbereich und im Prinzip auch eine verbesserte Multiplexierbarkeit. Ob und bis zu welchem Grad sich diese Vorteile ausnützen lassen zur Herstellung von Anzeigevorrichtungen mit hoher Informationsdichte (z.B. flache Bildschirme vergleichbarer Fläche wie jene von Kathodenstrahlröhren), hängt im wesentlichen davon ab, ob es gelingt, geeignete Flüssigkristallmaterialien zu entwickeln, welche insbesondere zu den gewünschten steilen Transmissionskennlinien in diesen Displays führen.

Damit Flüssigkristallmaterialien für praktische Anwendungen in Displays mit hochverdrillten Konfigurationen geeignet sind, müssen sie, wie die Materialien für 90°-Verdrillung, unter anderem eine möglichst geringe elektrische Leitfähigkeit besitzen, eine gute Stabilität gegen Wärme, Feuchtigkeit, Luft, elektromagnetische Strahlung und elektrische Felder aufweisen und einen guten Kontrast ergeben. Das Flüssigkristallmaterial muss ferner eine positive, (statische oder niederfrequente) dielektrische Anisotropie $\Delta\epsilon = \epsilon_{\parallel} - \epsilon_{\perp} > 0$ aufweisen, wobei $\epsilon_{\parallel}$ die Dielektrizitätskonstate parallel zu den Moleküllängsachsen und $\epsilon_{\perp}$ die Dielektrizitätskonstate senkrecht dazu bezeichnen. Weiterhin soll es eine ausreichend niedrige Schwellenspannung, einen breiten Mesophasenbereich und niedrige Viskosität aufweisen und kurze Ansprechzeiten ergeben.

Die für Anzeigevorrichtungen mit 90°-Verdrillung gebräuchlichen Flüssigkristalle bestehen im allgemeinen aus Verbindungen mit grosser positiver dielektrischer Anisotropie und unpolaren Verbindungen. Diese Materialien und insbesondere die für den Multiplexbetrieb von Drehzellenanzeigen (TN-LCDs) entwickelten Flüssigkristalle ergeben jedoch bei Anwendung in hochverdrillten Displays nach geeigneter Dotierung mit einem optisch aktiven Zusatz nicht die erhoffte grosse Verbesserung des Multiplexverhältnisses.

Die Aufgabe der vorliegenden Erfindung bestand daher darin, ein Flüssigkristallmaterial anzugeben, welches neben den übrigen, erwähnten Eigenschaften insbesondere eine verbesserte Multiplexierbarkeit in hochverdrillten Displays bei zugleich gutem Kontrast und niederer Schwellenspannung besitzt.

Es wurde nun gefunden, dass diese Aufgabe mit einem flüssigkristallinen Gemisch mit positiver dielektrischer Anisotropie gelöst werden kann, wenn der Flüssigkristall zusammengesetzt ist aus

a) 20-70 Gew.-% einer flüssigkristallinen Komponente A bestehend aus einer oder mehreren Verbindungen mit einer dielektrischen Anisotropie von über +1,5, welche mehrheitlich einen Wert $k_{33}/k_{11}$ von mindestens 1,3 aufweisen,

b) 20-70 Gew.-% einer flüssigkristallinen Komponente B bestehend aus einer oder mehreren Verbindungen mit einer dielektrischen Anisotropie von -1,5 bis +1,5, welche grösstenteils einen Wert $k_{33}/k_{11}$ von mindestens 0,9 aufweisen,

c) 1-20 Gew.-% einer Komponente C, bestehend aus einer oder mehreren Verbindungen mit einer dielektrischen Anisotropie von unter -1,5,

d) 5-40 Gew.-% einer Komponente D, bestehend aus einer oder mehreren Verbindungen mit einem Klärpunkt von über 80°C, und

e) einer optisch aktiven Komponente E in einer Menge, dass das Verhältnis zwischen Schichtdicke und natürlicher Ganghöhe des Gesamtgemisches etwa 0,2 bis 1,3 beträgt, und das Gesamtgemisch einen Wert $k_{33}/k_{11}$ von mindestens 1,2 aufweist; wobei $k_{11}$ und $k_{33}$ die elastischen Konstanten für Spreizung bzw. Biegung bedeuten, die dielektrischen Anisotropien und elastischen Konstanten der Verbindungen auf eine Temperatur 10°C unterhalb des Klärpunktes der Verbindung bezogen sind und die auf das Gesamtgemisch bezogenen Parameter bei 22°C gemessene Werte bedeuten.

Die Erfindung betrifft daher eine Flüssigkristallzelle aus einer zwischen zwei mit Elektroden und Oberflächenorientierungen versehenen Platten und Polarisatoren angeordneten hochverdrillten nematischen Flüssigkristallschicht mit positiver dielektrischer Anisotropie, welche die genannte Zusammensetzung aufweist.

Die Erfindung betrifft ebenfalls das erwähnte flüssigkristalline Gemisch. Da die Schichtdicke d (d.h. der Plattenabstand) in hochverdrillten Displays typischerweise etwa 5-10 μm oder weniger beträgt, kann die natürliche Ganghöhe P des Gemisches typischerweise etwa 4-50 μm oder mehr betragen.

Der obige Ausdruck "hochverdrillte nematische Flüssigkristllschicht" bezeichnet einen nematischen Flüssigkristall, der zwecks Erzielung einer Verdrillung von mehr als 90° mit einem optisch aktiven Material dotiert ist, wobei jedoch der genaue Wert der Verdrillung in der Zelle durch die Oberflächenorientierungen bestimmt wird.

Der obige Ausdruck "mehrheitlich" bedeutet, dass über 50 Gew.-%, vorzugsweise mindestens etwa 70 Gew.-% und besonders bevorzugt mindestens etwa 80 Gew.-% der Verbindungen in Komponente A den geforderten Wert von $k_{33}/k_{11}$ aufweisen.

Der obige Ausdruck "grösstenteils" bedeutet, dass über 75 Gew.-%, vorzugsweise mindestens etwa 80 Gew.-% und besonders bevorzugt mindestens etwa 90 Gew.-% der Verbindungen in Komponente B den geforderten Wert von $k_{33}/k_{11}$ aufweisen.

Im Falle von Verbindungen der Komponente A, B und C, welche nur einen virtuellen Klärpunkt aufweisen, ist unter der dielektrischen Anisotropie und dem Wert $k_{33}/k_{11}$ der extrapolierte Wert bei einer Temperatur 10°C unterhalb des virtuellen Klärpunktes zu verstehen.

Die Parameter $k_{11}$, $k_{22}$ und $k_{33}$ bezeichnen die elastischen Konstanten für Spreizung, Verdrillung und Biegung. Diese Konstanten sind bekannte Eigenschaften von Flüssigkristallen und sind beispielsweise beschrieben in Phys. Letters 72A, 155 (1979), Zeitschrift für Naturforschung 37a, 165 (1982), Mol. Cryst. Liq. Cryst. 122, 241 (1985) und IEEE Transactions on Electron Devices 33, 1187 (1986).

Die erfindungsgemässen Mischungen ermöglichen bei Anwendung in hochverdrillten Displays grosse Multiplexverhältnisse von etwa 200:1 und höher bei gleichzeitig gutem Kontrast von mindestens etwa 5:1, grossem Sichtwinkelbereich und niedriger Schwellenspannung von weniger als 3 Volt. Diese Verbesserung ist unter anderem auf den hohen Wert von $k_{33}/k_{11}$ und die Verwendung der Komponente C zurückzuführen verbunden mit der Verwendung der Komponente E zur Erzielung einer hochverdrillten nematischen Struktur.

Die Verwendung von Flüssigkristallen mit vergleichsweise grossem $k_{33}/k_{11}$-Wert zur Erzielung einer hohen Multiplexierbarkeit steht im Gegensatz zu Ergebnissen bei Anzeigezellen mit 90°-Verdrillung, für welche bekanntlich die Multiplexierbarkeit zunimmt mit abnehmenden Werten von $k_{33}/k_{11}$.

Gemische obiger Zusammensetzung besitzen in der Regel den geforderten $k_{33}/k_{11}$-Wert von mindestens 1,2. Die elastischen Konstanten des Gesamtgemisches sind im allgemeinen nicht linear abhängig von denen der Einzelverbindungen. Die zusätzliche Angabe des Verhältnisses $k_{33}/k_{11}$ für das Gesamtgemisch soll jene Gemische ausschliessen, welche möglicherweise einen tieferen Wert aufweisen.

Der $k_{33}/k_{11}$-Wert der erfindungsgemässen Gemische beträgt vorzugsweise mindestens etwa 1,3 und besonders bevorzugt mindestens etwa 1,4. Komponente A besteht vorzugs weise aus Verbindungen, welche mehrheitlich einen $k_{33}/k_{11}$-Wert von mindestens etwa 1,4, besonders bevorzugt von mindestens etwa 1,5 aufweisen. Komponente B besteht vorzugsweise aus Verbindungen, welche grösstenteils einen $k_{33}/k_{11}$-Wert von mindestens etwa 1,0, besonders bevorzugt von mindestens etwa 1,1 aufweisen.

Vorzugsweise werden die Verbindungen der Komponente D so ausgewählt, dass sie je nach dielektrischer Anisotropie die gleichen Anforderungen bezüglich $k_{33}/k_{11}$ erfüllen wie Komponente A bzw. B. Vorzugsweise besitzen die Verbindungen der Komponente D einen Klärpunkt von mindestens 100°C.

Die Multiplexierbarkeit der vorliegenden Gemische wird ferner verbessert durch einen niedrigen $\Delta\epsilon/\epsilon_\perp$-Wert des Gesamtgemisches. Diese Massnahme darf jedoch nicht zu hohen, mit den CMOS-Treibern nicht mehr kompatiblen Schwellenspannungen führen. Vorzugsweise beträgt der Wert von $\Delta\epsilon/\epsilon_\perp$ für das Gesamtgemisch etwa 0,8 bis 3,0, besonders bevorzugt etwa 0,8 bis 2,0. Die erfindungsgemässen Gemische besitzen in der Regel $\Delta\epsilon/\epsilon_\perp$-Werte in diesem bevorzugten Bereich.

Der $k_{22}/k_{11}$-Wert des Gesamtgemisches sollte vorzugsweise relativ niedrig sein und bevorzugt etwa 0,4 bis 0,7 betragen. Diese Eigenschaft ist für die meisten gebräuchlichen Flüssigkristalle erfüllt.

Vorzugsweise beträgt die Viskosität der Komponente A weniger als 45 mPa • s und diejenige der Komponente B weniger als 30 mPa • s bei Raumtemperatur (22°C).

Die obigen Werte für $\Delta\epsilon$ und $k_{33}/k_{11}$, welche Einzelverbindungen betreffen, sind bezogen auf eine Temperatur 10°C unterhalb des Klärpunktes der Einzelverbindung. Die übrigen Eigenschaften, nämlich die Viskositätsangaben und alle das Gesamtgemisch betreffenden Werte, beziehen sich auf eine Temperatur von 22°C.

Komponenten A, B und D können nematisch oder nicht nematisch sein und Komponenten C und E können flüssigkristallin oder nicht flüssigkristallin sein, solange das Gesamtgemisch eine hochverdrillte nematische Phase aufweist bzw. das Gemisch aus den Komponenten A, B, C und D eine nematische Phase aufweist. Vorzugsweise besitzen jedoch Komponenten A, B und D eine nematische Phase.

Die Mengen der Komponenten A-D liegen vorzugsweise in folgenden Bereichen: 30-60 Gew.-% für Komponente A, 20-50 Gew.-% für Komponente B, 2-10 Gew.-% für Komponente C und 8-30 Gew.-% für Komponente D. Insbesondere ergeben bereits geringe Mengen an Komponente C eine deutliche Verbesserung der Multiplexierbarkeit.

Geeignete Verbindungen für Komponenten A-E sind dem Fachmann bekannt und vielfach im Handel erhältlich.

Vorzugsweise enthält Komponente A eine oder mehrere Verbindungen der allgemeinen Formeln

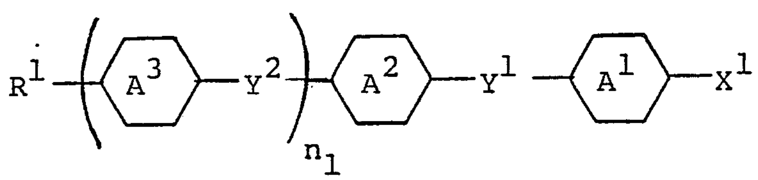 I

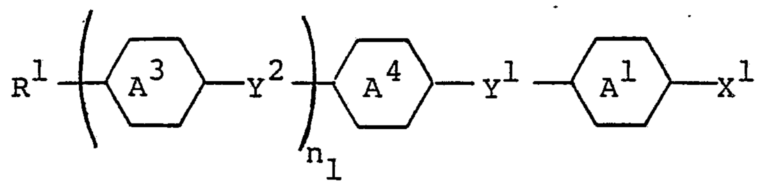 II

worin $R^1$ Alkyl, Alkoxy, Alkenyl oder Alkenyloxy mit bis zu 13 Kohlenstoffatomen bedeutet; $X^1$ für -CN oder -NCS steht; $Y^1$ und $Y^2$ einfache Kovalenzbindungen, $-CH_2CH_2-$, -COO-, -OOC-, $-CH_2O-$oder $-OCH_2-$bezeichnen; $n_1$ für die Zahl 0 oder 1 steht; die Ringe $A^1$, $A^2$ und $A^3$ trans-1,4-Cyclohexylen oder gegebenenfalls mit Methyl, Aethyl, Fluor, Chlor, Brom oder Cyano substituiertes 1,4-Phenylen darstellen; und $A^4$ einen 2,5-disubstituierten Pyrimidin-, m-Dioxan-oder Pyridinring bezeichnet,
wobei Verbindungen mit hohem $k_{33}/k_{11}$-Wert vorzugsweise unter den Verbindungen der Formel I und niederviskose Verbindungen vor allem unter den bicyclischen Verbindungen ausgewählt werden.

Komponente B enthält vorzugsweise eine oder mehrere Verbindungen der allgemeinen Formel

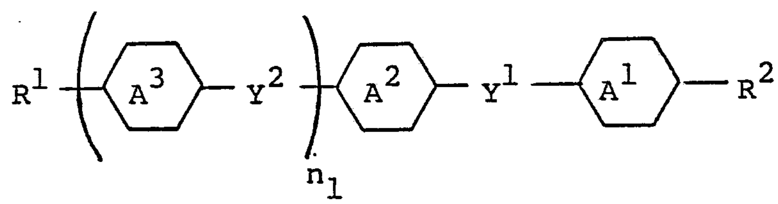 III

worin $R^2$ Alkyl, Alkoxy, Alkenyl oder Alkenyloxy mit bis zu 12 Kohlenstoffatomen bedeutet und $A^1$, $A^2$, $A^3$, $R^1$, $Y^1$, $Y^2$ und $n_1$ die obigen Bedeutungen haben,
wobei niederviskose Verbindungen vor allem unter den bicyclischen Verbindungen ausgewählt werden.

Komponente C enthält vorzugsweise eine oder mehrere Verbindungen mit einer 1-Cyano-trans-1,4-cyclohexylen-oder 2,3-Dicyano-1,4-phenylen-Gruppe, insbesondere die Verbindungen der allgemeinen Formeln

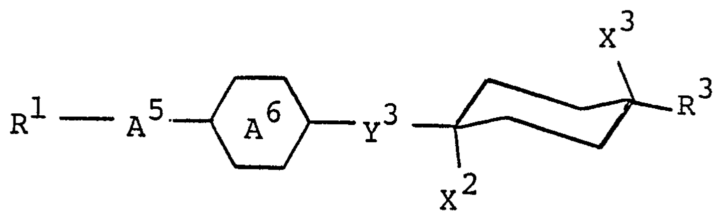

IV

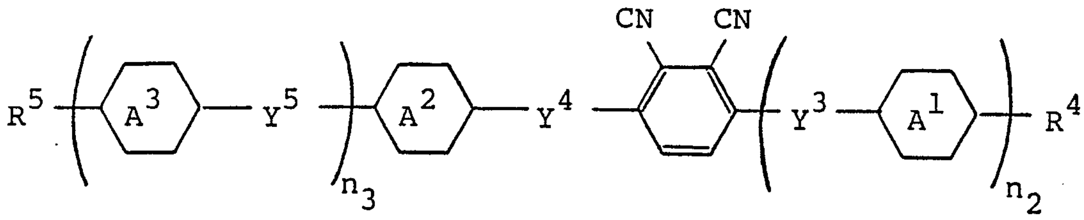

V

worin eine der Gruppen $X^2$ und $X^3$ Cyano und die andere Wasserstoff bedeutet; $A^6$ 1,4-Phenylen oder gegebenenfalls in 1-oder 4-Stellung mit Cyano substituiertes trans-1,4-Cyclohexylen bezeichnet; $A^5$ eine einfache Kovalenzbindung, 1,4-Phenylen oder trans-1,4-Cyclohexylen darstellt; $R^3$ Alkyl oder Alkenyl mit bis zu 13 Kohlenstoffatomen bedeutet; $Y^3$, $Y^4$ und $Y^5$ eine einfache Kovalenzbindung, $-CH_2-CH_2-$, -COO-oder -OOC-bezeichnen; die Indizes $n_2$ und $n_3$ für die Zahl 0 oder einer der Indizes auch für die Zahl 1 steht; und $R^4$ und $R^5$ Alkyl oder Alkoxy mit 1 bis 13 Kohlenstoffatomen darstellen; und $R^1$, $A^1$, $A^2$ und $A^3$ die obigen Bedeutungen haben.

Besonders bevorzugt sind die bicyclischen Verbindungen der Formeln IV und V.

Komponente D enthält vorzugsweise eine oder mehrere Verbindungen der allgemeinen Formel

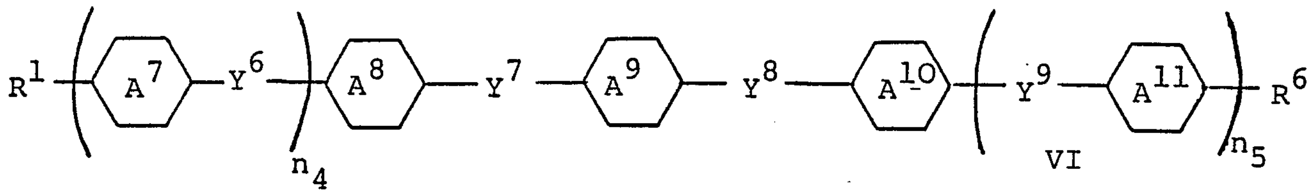

VI

worin $n_4$ und $n_5$ für die Zahlen 0 oder 1 stehen; die Ringe $A^7$, $A^8$, $A^9$, $A^{10}$ und $A^{11}$ 1,4-Phenylen oder trans-1,4-Cyclohexylen bezeichnen; $Y^6$, $Y^7$, $Y^8$ und $Y^9$ einfache Kovalenzbindungen darstellen oder eine oder zwei der Gruppen auch $-CH_2-CH_2-$, -COO-oder -OOC-darstellen; $R^6$ Alkyl, Alkoxy, Alkenyl oder Alkenyloxy mit bis zu 13 Kohlenstoffatomen oder Cyano bedeutet; und $R^1$ die obige Bedeutung hat,
insbesondere eine oder mehrere tetracyclische oder pentacyclische Verbindungen.

Vorzugsweise enthalten alle Komponenten A-D je eine oder mehrere der als bevorzugt genannten Verbindungen.

Als Komponente E sind grundsätzlich alle gebräuchlichen optisch aktiven Zusätze oder Gemische solcher Zusätze geeignet. Beispiele bevorzugter optisch aktiver Verbindungen sind 4-Alkyl-4'-cyanobiphenyle, 4-Alkoxy-4'-cyanobiphenyle, 4-Alkylbenzoesäure-4-cyanophenylester und 4-Alkoxybenzoe säure-4-cyanophenylester mit optisch aktiven Alkyl-bzw. Alkoxyseitenketten sowie Cholesterylester, Cholestrylchlorid, Androstan-3,17-dion, 16$\beta$-Methyl-17-oxoandrost-5-en-3$\beta$-ylacetat und dergleichen.

Zur Erzielung hoher $k_{33}/k_{11}$-Werte werden, insbesondere in Komponente A und B, vorzugsweise Verbindungen eingesetzt, welche eine Gruppe -COO-, -OOC-oder $-CH_2CH_2-$zwischen zwei Ringen und/oder eine Alkenyl-oder Alkenyloxy-gruppe aufweisen. Besonders bevorzugt sind diejenigen Verbindungen, welche mindestens eine $CH_2CH_2$-Gruppe zwischen zwei Ringen und/oder eine trans-Alkenyl-oder trans-Alkenyloxy-Seitenkette des folgenden Typs aufweisen:

$R-CH=CH-(CH_2CH_2)_n-$ VII

$R-CH=CH-(CH_2CH_2)_n-CH_2O-$ VIII

worin n eine ganze Zahl von 0 bis 5 bezeichnet und R Wasserstoff oder Alkyl bedeutet.

Vorzugsweise steht n in obigen Gruppen für 0 oder 1. Vorzugsweise enthalten Komponenten A, B, C und/oder D, insbesondere Komponenten A und/oder B, eine oder mehrere Verbindungen mit mindestens einer der obigen Gruppen.

Besonders bevorzugt sind diejenigen Gemische, deren Komponente A aus einer oder mehreren Verbindungen der Formel I und/oder II besteht, und/oder deren Komponente B aus einer oder mehreren Verbindungen der Formel III besteht, und/oder deren Komponente C aus einer oder mehreren Verbindungen der Formel IV und/oder V besteht, und/oder deren Komponente D aus einer oder mehreren Verbindungen der Formel VI besteht, wobei die Verbindungen mit hohen $k_{33}/k_{11}$ vorzugsweise eine oder mehrere der oben genannten Brückengruppen und/oder Seitenketten aufweisen. Vorzugsweise bestehen alle Komponenten A-D aus Verbindungen der genannten Formeln, d.h. besonders bevorzugt ist ein Flüssigkristall bestehend aus einer oder mehreren Verbindungen der Formel I und/oder II, einer oder mehreren Verbindungen der Formel III, einer oder mehreren Verbindungen der Formeln IV und/oder V, einer oder mehreren Verbindungen der Formel VI und einer Komponente E in den oben angegebenen Mengen.

Die Herstellung der erfindungsgemässen Mischungen und Anzeigezellen kann nach an sich bekannten Methoden erfolgen.

Die Erfindung wird durch die folgenden Beispiele weiter veranschaulicht. Die Mischungen wurden in STN-bzw. OMI-Displays mit 180° Verdrillung bei 22°C gemessen. d bedeutet den Plattenabstand; $p_o = (V_{50}-V_{10})/V_{10}$ ist ein Mass für die Steilheit der Transmissionskennlinie (gemessen bei Sichtwinkel 0°), wobei $V_{10}$ und $V_{50}$ die Spannung für 10% bzw 50% Transmission bedeuten; $N_{max}$ bezeichnet die maximale Zahl multiplexierbarer Linien; $\eta$ bedeutet die Bulk-Viskosität und $\Delta n$ die optische Anisotropie. Die Prozentangaben sind in Gew.-% und die Menge des optisch aktiven Zusatzes ist bezogen auf das Gesamtgemisch.

Beispiel 1

13% p-[trans-4-(1E-Pentenyl)cyclohexyl]benzonitril,
10% p-[trans-4-(3-Butenyl)cyclohexyl]benzonitril,
8% p-[trans-4-(3E-Pentenyl)cyclohexyl]benzonitril,
16% p-(trans-4-Propylcyclohexyl)phenylisothiocyanat,
7% 4-(2E-Butenyloxy)-1-(trans-4-propylcyclohexyl)benzol,
5% 4-Aethoxy-1-(trans-4-propylcyclohexyl)benzol,
5% 4'-Aethyl-4-[trans-4-(3E-pentenyl)cyclohexyl]biphenyl,
5% 4'-Propyl-4-[trans-4-(3E-pentenyl)cyclohexyl]biphenyl,
7% trans-4-Propylcyclohexancarbonsäure-p-[trans-4-(3E-pentenyl)cyclohexyl]phenylester,
12% 1-[2-(trans-4-Butylcyclohexyl)äthyl]-4-(trans-4-pentylcyclohexyl)benzol,
4% 4-[2-(trans-4-Butylcyclohexyl)äthyl]-4'-(trans-4-pentylcyclohexyl)biphenyl,
3% 4-[2-(trans-4-Butylcyclohexyl)äthyl]-4'-(trans-4-pentylcyclohexyl)-1,1'-äthylendibenzol,
5% 4-Butyl-2,3-dicyano-1-[2-(trans-4-pentylcyclohexyl)äthyl]benzol.

Dieses Gemisch wurde mit 0,458% optisch aktivem 16β-Methyl-17-oxoandrost-5-en-3β-ylacetat versetzt.

Smp. <-30°C, Klp. 81°C; d = 8 µm; $\epsilon_{\|} = 11{,}5$, $\Delta\epsilon = 6{,}8$, $\Delta\epsilon/\epsilon_{\perp} = 1{,}5$; $V_{10} = 2{,}120$ Volt; $k_{11} = 13{,}8$ pN, $k_{22}/k_{11} = 0{,}435$, $k_{33}/k_{11} = 1{,}47$; $p_o = 0{,}028$, $N_{max} = 1312$, $\eta = 22$ mPa • s, $\Delta n = 0{,}133$.

Beispiel 2

15,5% p-[trans-4-(1E-Butenyl)cyclohexyl]benzonitril,
12% p-[trans-4-(3-Butenyl)cyclohexyl]benzonitril,
4% 4'-[trans-4-(3E-Pentenyl)cyclohexyl]-4-biphenylcarbonitril,
5,5% 4'-[trans-4-(4-Pentenyl)cyclohexyl]-4-biphenylcarbonitril,
15,5% p-(trans-4-Propylcyclohexyl)phenylisothiocyanat,
6% 4-Aethyl-1-[2-(trans-4-propylcyclohexyl)äthyl]benzol,
4% 4-Aethoxy-1-(trans-4-propylcyclohexyl)benzol,
4% 4'-Aethyl-4-[trans-4-(3E-pentenyl)cyclohexyl]biphenyl,
8% 4'-Propyl-4-[trans-4-(3E-pentenyl)cyclohexyl]biphenyl,
3,5% trans-4-Propylcyclohexancarbonsäure-p-[trans-4-(3E-pentenyl)cyclohexyl]phenylester,
10% 1-[2-(trans-4-Butylcyclohexyl)äthyl]-4-(trans-4-pentylcyclohexyl)benzol,
4% 4-[2-(trans-4-Butylcyclohexyl)äthyl]-4'-(trans-4-pentylcyclohexyl)biphenyl,
3% 4-[2-(trans-4-Butylcyclohexyl)äthyl]-4'-[trans-4-(3E-pentenyl)cyclohexyl]biphenyl,
5% 4-Butyl-2,3-dicyano-1-[2-(trans-4-pentylcyclohexyl)äthyl]benzol.

Dieses Gemisch wurde mit 0,460% optisch aktivem 16β-Methyl-17-oxoandrost-5-en-3β-ylacetat versetzt.
Smp. <-30°C, Klp. 84°C; d = 6,5 µm; $\epsilon_\parallel$ = 12,2, $\Delta\epsilon$ = 7,5, $\Delta\epsilon/\epsilon_\perp$ = 1,6; $V_{10}$ = 1,955 Volt; $k_{11}$ = 12,6 pN, $k_{22}/k_{11}$ = 0,484, $k_{33}/k_{11}$ = 1,48; $p_o$ = 0,028, $N_{max}$ = 1312, $\eta$ = 25 mPa • s, $\Delta n$ = 0,142.

Beispiel 3

10% p-[trans-4-(3-Butenyl)cyclohexyl]benzonitril,
10% p-[trans-4-(3E-Pentenyl)cyclohexyl]benzonitril,
4% p-(5-Butyl-2-pyrimidinyl)benzonitril,
7% 4-Aethoxy-1-[2-(trans-4-propylcyclohexyl)äthyl]benzol,
12% trans-4-Butylcyclohexancarbonsäure-trans-4-butylcyclohexylester,
12% trans-4-Pentylcyclohexancarbonsäure-trans-4-propylcyclohexylester,
10% trans-4-Propylcyclohexancarbonsäure-trans-4-propylcyclohexylester,
10% 1-[2-(trans-4-Butylcyclohexyl)äthyl]-4-(trans-4-pentylcyclohexyl)benzol,
6% 4-[2-(trans-4-Butylcyclohexyl)äthyl]-4'-(trans-4-pentylcyclohexyl)biphenyl,
8% trans-4-Propylcyclohexancarbonsäure-p-[trans-4-(3E-pentenyl)cyclohexyl]phenylester,
4% 4'-(trans-4-Pentylcyclohexyl)-4-biphenylcarbonsäure-trans-4-(p-propylphenyl)cyclohexylester,
7% r-1-Cyan-1-(3-butenyl)-cis-4-(trans-4-pentylcyclohexyl)cyclohexan.

Dieses Gemisch wurde mit 0,52% optisch aktivem 16β-Methyl-17-oxoandrost-5-en-3β-ylacetat versetzt.
Smp. <-30°C, Klp. 81°C; d = 6 µm; $\epsilon_\parallel$ = 8,5, $\Delta\epsilon$ = 4,0, $\Delta\epsilon/\epsilon_\perp$ = 0,88; $k_{11}$ = 12,1 pN, $k_{22}/k_{11}$ = 0,449, $k_{33}/k_{11}$ = 1,33; $\eta$ = 23 mPa • s, $\Delta n$ = 0,091.

Beispiel 4

10% p-(trans-4-(3-Butenyl)cyclohexyl]benzonitril,
10% p-[trans-4-(3E-Pentenyl)cyclohexyl]benzonitril,
6% p-(5-Butyl-2-pyrimidinyl)benzonitril,
12% trans-4-Butylcyclohexancarbonsäure-trans-4-butylcyclohexylester,
12% trans-4-Pentylcyclohexancarbonsäure-trans-4-propylcyclohexylester,
10% trans-4-Propylcyclohexancarbonsäure-trans-4-propylcyclohexylester,
8% trans-4-Propylcyclohexancarbonsäure-p-[trans-4-(3E-pentenyl)cyclohexyl]phenylester,
12% 1-[2-(trans-4-Butylcyclohexyl)äthyl]-4-(trans-4-pentylcyclohexyl)benzol,
4% 4-[2-(trans-4-Butylcyclohexyl)äthyl]-4'-(trans-4-pentylcyclohexyl)biphenyl,
6% 4-[2-(trans-4-Butylcyclohexyl)äthyl-4'-(trans-4-pentylcyclohexyl)-1,1'-äthylendibenzol,
10% r-1-Cyan-1-(3-butenyl)-cis-4-(trans-4-pentylcyclohexyl)cyclohexan.

Dieses Gemisch wurde mit 0,595% optisch aktivem 16β-Methyl-17-oxoandrost-5-en-3β-ylacetat versetzt.
Smp. <-30°C, Klp. 81°C; d = 5 µm; $\epsilon_\parallel$ = 9,0, $\Delta\epsilon$ = 4,4, $\Delta\epsilon/\epsilon_\perp$ = 0,9; $k_{11}$ = 11,1 pN, $k_{22}/k_{11}$ = 0,447, $k_{33}/k_{11}$ = 1,31; $\eta$ = 24 mPa • s, $\Delta n$ = 0,088.

Beispiel 5

10% p-[trans-4-(3-Butenyl)cyclohexyl]benzonitril,
10% p-[trans-4-(3E-Pentenyl)cyclohexyl]benzonitril,
3% 4'-[trans-4-(3E-Pentenyl)cyclohexyl]-4-biphenylcarbonitril,
6% p-(5-Butyl-2-pyrimidinyl)benzonitril,
12% trans-4-Butylcyclohexancarbonsäure-trans-4-butylcyclohexylester,
12% trans-4-Pentylcyclohexancarbonsäure-trans-4-propylcyclohexylester,
10% trans-4-Propylcyclohexancarbonsäure-trans-4-propylcyclohexylester,
5% trans-4-Propylcyclohexancarbonsäure-p-[trans-4-(3E-pentenyl)cyclohexyl]phenylester,
12% 1-[2-(trans-4-Butylcyclohexyl)äthyl]-4-(trans-4-pentylcyclohexyl)benzol,
4% 4-[2-(trans-4-Butylcyclohexyl)äthyl]-4'-(trans-4-pentylcyclohexyl)biphenyl,
6% 4-[2-(trans-4-Butylcyclohexyl)äthyl]-4'-(trans-4-pentylcyclohexyl)-1,1'-äthylendibenzol,
10% r-1-Cyan-1-(3-butenyl)-cis-4-(trans-4-pentylcyclohexyl)cyclohexan.

Dieses Gemisch wurde mit 0,52% optisch aktivem 16β-Methyl-17-oxoandrost-5-en-3β-ylacetat versetzt. Smp. <-30°C, Klp. 78°C; d = 6 μm; $\epsilon_\|$ = 9,7, $\Delta\epsilon$ = 5,0, $\Delta\epsilon/\epsilon_\perp$ = 1,0; $k_{11}$ = 11,5 pN, $k_{22}/k_{11}$ = 0,439, $k_{33}/k_{11}$ = 1,40; $\eta$ = 24 mPa • s, $\Delta n$ = 0,093.

## Beispiel 6

16% p[trans-4-(1E-Butenyl)cyclohexyl]benzonitril,
12% p-[trans-4-(3-Butenyl)cyclohexyl]benzonitril,
4% 4'-[trans-4-(3E-Pentenyl)cyclohexyl]-4-biphenylcarbonitril,
4% 4'-[trans-4-(4-Pentenyl)cyclohexyl]-4-biphenylcarbonitril,
15% p-(trans-4-Propylcyclohexyl)phenylisothiocyanat,
6% 4-Aethyl-1-[2-(trans-4-propylcyclohexyl)äthyl]benzol,
5% 4-Aethoxy-1-(trans-4-propylcyclohexyl)benzol,
4% 4'-Aethyl-4-[trans-4-(3E-pentenyl)cyclohexyl]biphenyl,
5% 4'-Propyl-4-[trans-4-(3E-pentenyl)cyclohexyl]biphenyl,
5% trans-4-Propylcyclohexancarbonsäure-p-[trans-4-(3E-pentenyl)cyclohexyl]phenylester,
10% 1-[2-(trans-4-Butylcyclohexyl)äthyl]-4-(trans-4-pentylcyclohexyl)benzol,
5% 4-[2-(trans-4-Butylcyclohexyl)äthyl]-4'-(trans-4-pentylcyclohexyl)biphenyl,
4% 4-[2-(trans-4-Butylcyclohexyl)äthyl]-4'-(trans-4-pentylcyclohexyl)-1,1'-äthylendibenzol,
5% r-1-Cyan-1-(3-butenyl)-cis-4-(trans-4-pentylcyclohexyl)cyclohexan.

Dieses Gemisch wurde mit 0,49% optisch aktivem 16β-Methyl-17-oxoandrost-5-en-3β-ylacetat versetzt. Smp. <-30°C, Klp. 93°C; d = 8 μm; $\epsilon_\|$ = 11,5, $\Delta\epsilon$ = 7,6, $\Delta\epsilon/\epsilon_\perp$ = 1,9; $k_{11}$ = 13,4 pN, $k_{22}/k_{11}$ = 0,439, $k_{33}/k_{11}$ = 1,56; $\eta$ = 21 mPa • s, $\Delta n$ = 0,141.

## Beispiel 7

10% p-[trans-4-(3-Butenyl)-cyclohexyl]benzonitril,
10% p-[trans-4-(3E-Pentenyl)cyclohexyl]benzonitril,
3% p-[trans-4-(4-Pentenyl)cyclohexyl]benzonitril,
5% 4'-[trans-4-(3-Butenyl)cyclohexyl]-4-biphenylcarbonitril,
3% p-(trans-4-Propylcyclohexyl)phenylisothiocyanat,
7% p-(5-Butyl-2-pyrimidinyl)benzonitril,
10% trans-4-Pentylcyclohexancarbonsäure-trans-4-propylcyclohexylester,
11% 4-Aethoxy-1-[2-(trans-4-pentylcyclohexyl)äthyl]benzol,
6% 4-Aethoxy-1-(trans-4-propylcyclohexyl)benzol,
8% trans-4-Propylcyclohexancarbonsäure-p-[trans-4-(3E-pentenyl)cyclohexyl]phenylester,
9% 1-[2-(trans-4-Butylcyclohexyl)äthyl]-4-(trans-4-pentylcyclohexyl)benzol,
5% 4-[2-(trans-4-Butylcyclohexyl)äthyl]-4'-(trans-4-pentylcyclohexyl)biphenyl,
5% 4-[2-(trans-4-Butylcyclohexyl)äthyl]-4'-(trans-4-pentylcyclohexyl)-1,1'-äthylendibenzol,
4% 4'-(trans-4-Pentylcyclohexyl)-4-biphenylcarbonsäure-trans-4-(p-propylphenyl)cyclohexylester,
4% r-1-Cyan-1-(3-butenyl)-cis-4-(trans-4-pentylcyclohexyl)cyclohexan.

Dieses Gemisch wurde mit 0,542% optisch akitvem 16β-Methyl-17-oxoandrost-5-en-3β-ylacetat versetzt.
Smp. <-30°C, Klp. 96°C; d = 8 μm; $\epsilon_\|$ = 11,2, $\Delta\epsilon$ = 7,0, $\Delta\epsilon/\epsilon_\perp$ = 1,7; $k_{11}$ = 14,1 pN, $k_{22}/k_{11}$ = 0,450, $k_{33}/k_{11}$ = 1,45; $\eta$ = 23 mPa • s, $\Delta n$ = 0,123.

## Beispiel 8

12,5% p-[trans-4-(1E-Butenyl)cyclohexyl]benzonitril,
12,1% p-[trans-4-(3-Butenyl)cyclohexyl]benzonitril,
3,7% 4'-[trans-4-(3E-Pentenyl)cyclohexyl]-4-biphenylcarbonitril,
7,0% 4'-[trans-4-(4-Pentenyl)cyclohexyl]-4-biphenylcarbonitril,
16,3% p-(trans-4-Propylcyclohexyl)phenylisothiocyanat,
5,6% 4-Aethyl-1-[2-(trans-4-propylcyclohexyl)äthyl]benzol,
3,7% 4-Aethyl-1-[trans-4-(4-pentenyl)cyclohexyl]benzol,

3,7% 4'-Aethyl-4-[trans-4-(3E-pentenyl)cyclohexyl]biphenyl,
7,4% 4'-Propyl-4-[trans-4-(3E-pentenyl)cyclohexyl]biphenyl,
3,3% p-[trans-4-(3E-Pentenyl)cyclohexyl]benzoesäure-p-propylphenylester,
11,2% 1-[2-(trans-4-Butylcyclohexyl)äthyl]-4-(trans-4-pentylcyclohexyl)benzol,
3,7% 4-[2-(trans-4-Butylcyclohexyl)äthyl]-4'-(trans-4-pentylcyclohexyl)biphenyl,
2,8% 4-[2-(trans-4-Butylcyclohexyl)äthyl]-4'-(trans-4-pentylcyclohexyl)-1,1'-äthylendibenzol,
7,0% r-1-Cyan-1-(3-butenyl)-cis-4-(trans-4-pentylcyclohexyl)cyclohexan.

Dieses Gemisch wurde mit 0,42 % optisch aktivem 16$\beta$-methyl-17-oxoandrost-5-en-3$\beta$-ylacetat versetzt. Smp. <-30°C, Klp. 86°C; d = 6,5 $\mu$m; $p_o$ = 0,030, $N_{max}$ = 1145.

Beispiel 9

Vergleichsgemisch zu Beispiel 8 ohne Komponente C.
13,5% p-[trans-4-(1E-Butenyl)cyclohexyl]benzonitril,
13% p-[trans-4-(3-Butenyl)cyclohexyl]benzonitril,
4% 4'-[trans-4-(3E-Pentenyl)cyclohexyl]-4-biphenylcarbonitril,
7,5% 4'-[trans-4-(4-Pentenyl)cyclohexyl]-4-biphenylcarbonitril,
17,5% p-(trans-4-Propylcyclohexyl)phenylisothiocyanat,
6% 4-Aethyl-1-[2-(trans-4-propylcyclohexyl)äthyl]benzol,
4% 4-Aethyl-1-[trans-4-(4-pentenyl)cyclohexyl]benzol,
4% 4'-Aethyl-4-[trans-4-(3E-pentenyl)cyclohexyl]biphenyl,
8% 4'-Propyl-4-[trans-4-(3E-pentenyl)cyclohexyl]biphenyl,
3,5% p-[trans-4-(3E-Pentenyl)cyclohexyl]benzoesäure-p-propylphenylester,
12% 1-[2-(trans-4-Butylcyclohexyl)äthyl]-4-(trans-4-pentylcyclohexyl)benzol,
4% 4-[2-(trans-4-Butylcyclohexyl)äthyl]-4'-(trans-4-pentylcyclohexyl)biphenyl,
3% 4-[2-(trans-4-Butylcyclohexyl)äthyl]-4'-(trans-4-pentylcyclohexyl)-1,1'-äthylendibenzol.

Dieses Gemisch wurde mit 0,579% optisch aktivem 16$\beta$-Methyl-17-oxoandrost-5-en-3$\beta$-ylacetat versetzt. Smp. <-30°C, Klp. 91°C; d = 6,5 $\mu$m; $\epsilon_{\|}$ = 11,5, $\Delta\epsilon$ = 8,0, $\Delta\epsilon/\epsilon_{\perp}$ = 2,3; $V_{10}$ = 2,060 Volt; $k_{11}$ = 13,7 pN, $k_{22}/k_{11}$ = 0,475, $k_{33}/k_{11}$ = 1,46; $p_o$ = 0,038, $N_{max}$ = 720; $\eta$ = 19 mPa • s, $\Delta n$ = 0,149.

**Ansprüche**

1. Flüssigkristallzelle aus einer zwischen zwei mit Elektroden und Oberflächenorientierungen versehenen Platten und Polarisatoren angeordneten hochverdrillten nematischen Flüssigkristallschicht mit positiver dielektrischer Anisotropie, dadurch gekennzeichnet, dass der Flüssigkristall zusammengesetzt ist aus
a) 20-70 Gew.-% einer flüssigkristallinen Komponente A bestehend aus einer oder mehreren Verbindungen mit einer dielektrischen Anisotropie von über +1,5, welche mehrheitlich einen Wert $k_{33}/k_{11}$ von mindestens 1,3 aufweisen,
b) 20-70 Gew.-% einer flüssigkristallinen Komponente B bestehend aus einer oder mehreren Verbindungen mit einer dielektrischen Anisotropie von -1,5 bis +1,5, welche grösstenteils einen Wert $k_{33}/k_{11}$ von mindestens 0,9 aufweisen,
c) 1-20 Gew.-% einer Komponente C, bestehend aus einer oder mehreren Verbindungen mit einer dielektrischen Anisotropie von unter -1,5,
d) 5-40 Gew.-% einer Komponente D, bestehend aus einer oder mehreren Verbindungen mit einem Klärpunkt von über 80°C, und
e) einer optisch aktiven Komponente E in einer Menge, dass das Verhältnis zwischen Schichtdicke und natürlicher Ganghöhe des Gesamtgemisches etwa 0,2 bis 1,3 beträgt,
und dass das Gesamtgemisch einen Wert $k_{33}/k_{11}$ von mindestens 1,2 aufweist; wobei $k_{11}$ und $k_{33}$ die elastischen Konstanten für Spreizung bzw. Biegung bedeuten, die dielektrischen Anisotropien und elastischen Konstanten der Verbindungen auf eine Temperatur 10°C unterhalb des Klärpunktes der Verbindung bezogen sind und die auf das Gesamtgemisch bezogenen Parameter bei 22°C gemessene Werte bedeuten.

2. Flüssigkristallzelle nach Anspruch 1, dadurch gekennzeichnet, dass das Gesamtgemisch einen $\Delta\epsilon/\epsilon_{\perp}$-Wert von etwa 0,8 bis 3,0 bei 22°C aufweist, wobei $\Delta\epsilon$ die dielektrische Anisotropie und $\epsilon_{\perp}$ die Dielektrizitätskonstate senkrecht zu den Moleküllängsachsen bezeichnet.

3. Flüssigkristallzelle nach Anspruch 1 oder 2, dadurch gekennzeichnet, dass mindestens etwa 70 Gew.-% der Verbindungen in Komponente A einen Wert $k_{33}/k_{11}$ von mindestens 1,3 aufweisen und/oder mindestens etwa 80 Gew.-% der Verbindungen in Komponente B einen Wert $k_{33}/k_{11}$ von mindestens 0,9 aufweisen.

4. Flüssigkristallzelle nach einem der Ansprüche 1 bis 3, dadurch gekennzeichnet, dass der Flüssigkristall zusammengesetzt ist aus 30-60 Gew.-% Komponente A, 20-50 Gew.-% Komponente B, 2-10 Gew.-% Komponente C, 8-30 Gew.-% Komponente D und der optisch aktiven Komponente E.

5. Flüssigkristallzelle nach einem der Ansprüche 1 bis 4, dadurch gekennzeichnet, dass Komponente C eine oder mehrere Verbindungen mit einer 1-Cyano-trans-1,4-cyclohexylen-Gruppe oder einer 2,3-Dicyano-1,4-phenylen-Gruppe enthält.

6. Flüssigkristallzelle nach einem der Ansprüche 1 bis 5, dadurch gekennzeichnet, dass Komponente A eine oder mehrere Verbindungen der allgemeinen Formeln

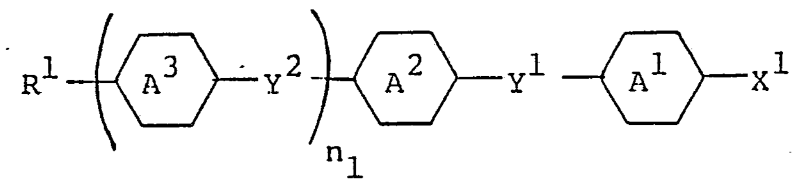

I

und/oder

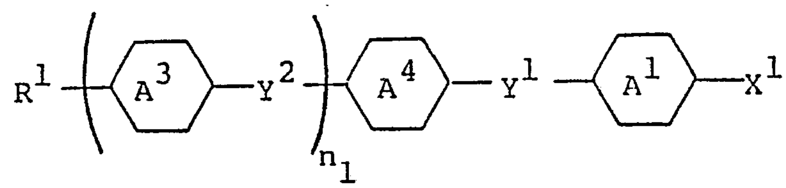

II

worin $R^1$ Alkyl, Alkoxy, Alkenyl oder Alkenyloxy mit bis zu 13 Kohlenstoffatomen bedeutet; $X^1$ für -CN oder -NCS steht; $Y^1$ und $Y^2$ einfache Kovalenzbindungen, $-CH_2CH_2-$, -COO-, -OOC-, $-CH_2O-$oder $-OCH_2-$bezeichnen; $n_1$ für die Zahl 0 oder 1 steht; die Ringe $A^1$, $A^2$ und $A^3$ trans-1,4-Cyclohexylen oder gegebenenfalls mit Methyl, Aethyl, Fluor, Chlor, Brom oder Cyano substituiertes 1,4-Phenylen darstellen; und $A^4$ einen 2,5-disubstituierten Pyrimidin-, m-Dioxan-oder Pyridinring bezeichnet,
enthält, und/oder Komponente B eine oder mehrere Verbindungen der allgemeinen Formel

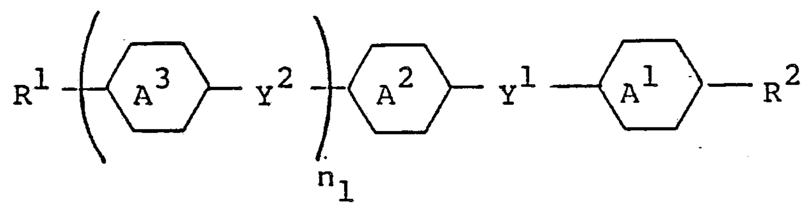

III

worin $R^2$ Alkyl, Alkoxy, Alkenyl oder Alkenyloxy mit bis zu 12 Kohlenstoffatomen bedeutet und $A^1$, $A^2$, $A^3$, $R^1$, $Y^1$, $Y^2$ und $n_1$ die obigen Bedeutungen haben,
enthält, und/oder Komponente C eine oder mehrere Verbindungen der allgemeinen Formeln

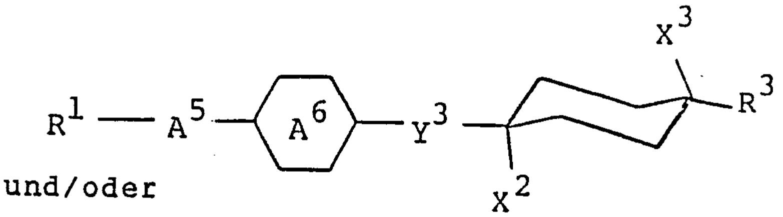

IV

und/oder

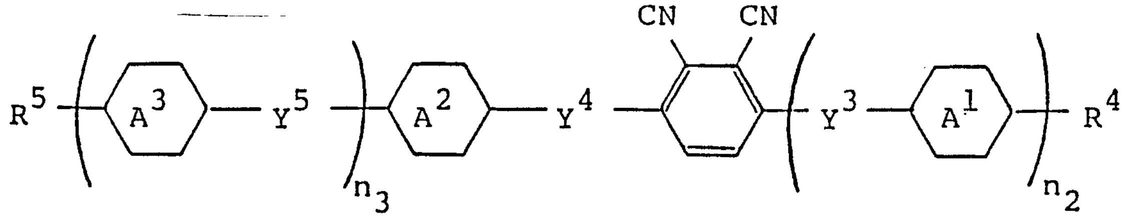

V

worin eine der Gruppen $X^2$ und $X^3$ Cyano und die andere Wasserstoff bedeutet; $A^6$ 1,4-Phenylen oder gegebenenfalls in 1-oder 4-Stellung mit Cyano substituiertes trans-1,4-Cyclohexylen bezeichnet; $A^5$ eine einfache Kovalenzbindung, 1,4-Phenylen oder trans-1,4-Cyclohexylen darstellt; $R^3$ Alkyl oder Alkenyl mit bis zu 13 Kohlenstoffatomen bedeutet; $Y^3$, $Y^4$ und $Y^5$ eine einfache Kovalenzbindung, $-CH_2CH_2-$, -COO-oder -OOC-bezeichnen; die Indizes $n_2$ und $n_3$ für die Zahl 0 oder einer der Indizes auch für die Zahl 1 steht; und $R^4$ und $R^5$ Alkyl oder Alkoxy mit 1 bis 13 Kohlenstoffatomen darstellen; und $R^1$, $A^1$, $A^2$ und $A^3$ die obigen Bedeutungen haben,
enthält, und/oder Komponente D eine oder mehrere Verbindungen der allgemeinen Formel

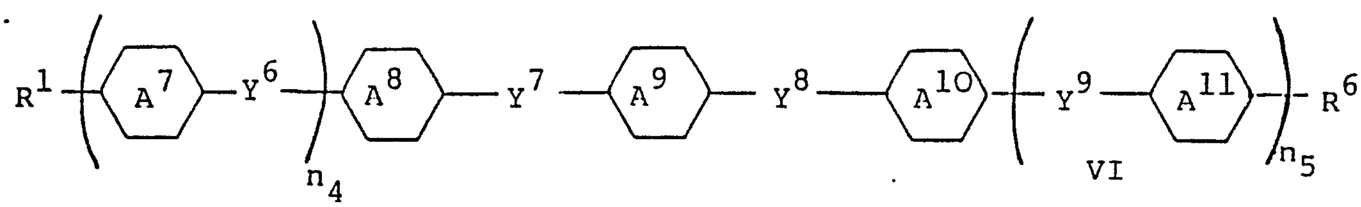

VI

worin $n_4$ und $n_5$ für die Zahlen 0 oder 1 stehen; die Ringe $A^7$, $A^8$, $A^9$, $A^{10}$ und $A^{11}$ 1,4-Phenylen oder trans-1,4-Cyclohexylen bezeichnen; $Y^6$, $Y^7$, $Y^8$ und $Y^9$ einfache Kovalenzbindungen darstellen oder eine oder zwei der Gruppen auch $-CH_2CH_2-$, -COO-oder -OOC-darstellen; $R^6$ Alkyl, Alkoxy, Alkenyl oder Alkenyloxy mit bis zu 13 Kohlenstoffatomen oder Cyano bedeutet; und $R^1$ die obige Bedeutung hat,
enthält.

7. Flüssigkristallzelle nach Anspruch 6, dadurch gekennzeichnet, dass Komponente A aus einer oder mehreren Verbindungen der Formeln I und/oder II besteht, und/oder Komponente B aus einer oder mehreren Verbindungen der Formel III besteht, und/oder Komponente C aus einer oder mehreren Verbindungen der Formeln IV und/oder V besteht, und/oder Komponente D aus einer oder mehreren Verbindungen der Formel VI besteht.

8. Flüssigkristallzelle nach einem der Ansprüche 1 bis 7, dadurch gekennzeichnet, dass Komponente A und/oder B eine oder mehrere Verbindungen enthält, welche eine $CH_2CH_2$-Gruppe zwischen zwei Ringen und/oder eine trans-Alkenyl-gruppe $R-CH=CH-(CH_2CH_2)_n$-oder eine trans-Alkenyloxy-gruppe $R-CH=CH-(CH_2CH_2)_n-CH_2O$-aufweisen, worin n eine ganze Zahl von 0 bis 5 und R Wasserstoff oder Alkyl bezeichnen.

9. Flüssigkristallines Gemisch der in einem der Ansprüche 1 bis 8 definierten Zusammensetzung.

10. Flüssigkristallines Gemisch nach Anspruch 9, dadurch gekennzeichnet, dass die natürliche Ganghöhe 4-50 µm beträgt.